# EUROPEAN PATENT APPLICATION

(11) **EP 3 941 012 A1**
(43) Date of publication of application: **19.01.2022**
(21) Application number: 20185722.4
(22) Date of filing: 14.07.2020
(51) Int. Cl.: H04L 29/06, H04L 9/32, G06Q 10/06

(54) **METHOD FOR PUBLISHING PROCESS DATA OF A INDUSTRIAL FACILITY**

(71) Applicant: Siemens Aktiengesellschaft, 80333 München (DE); Siemens Technology And Services Pvt. Ltd., 400018 Mumbai (IN)
(72) Inventor: Rangapura Shettappa, Chandrashekara, 91052 Erlangen (DE); A, Balakrishnan, 560021 Bangalore (IN)
(74) Representative: Maier, Daniel Oliver

(57) **Abstract**

The current invention proposes a method for publishing process data of a industrial facility by a control system connected to a blockchain network. The method comprising receiving process data from at least one industrial device, authenticating a validity of the process data by verifying a signature of the at least one industrial device; and transmitting the process data to a blockchain transaction service of the blockchain network. The blockchain transaction service is configured to write the process data to a data block in a first block chain based on metadata associated with the process data. The blockchain network comprises a watcher service configured to monitor a plurality of events associated with the first block chain in the block chain network. The watcher service is configured to detect write of process data to the data block in the first block chain.

## Description

### Background

The current invention relates to process control systems and more particularly, to control systems in complex industrial environments. Often, industrial facilities may be present across a plurality of geographical locations and may be required to share information amongst each other to perform a plurality of collaborative operations.

### Description

The current disclosure relates to control systems and more particularly, to control systems in complex industrial environments or facilities.

In complex industrial environments, such as mining, a plurality of industrial facilities may be spread across a plurality of geographical locations. Since these facilities are spread across various locations, information sharing is possible using public networks such as the Internet. However, this mode of sharing information is susceptible to data breach and data tampering. Accordingly, it is often a complex and difficult task to consolidate and compare data in such situations across various facilities. Therefore, benchmarking, optimization and other such data analytics in such environments is often challenging.

The current disclosure addresses the issues discussed above by disclosing a method in accordance to claim 1, a industrial gateway device according to claim 5, an industrial device according to claim 9 and a non-transitory storage medium according to claim 10.

Accordingly, the current invention proposes a method for publishing process data of a industrial facility by a control system connected to a blockchain network. The method comprising receiving process data from at least one industrial device, authenticating a validity of the process data by verifying a signature of the at least one industrial device; and transmitting the process data to a blockchain transaction service of the blockchain network. The process data is associated with an industrial process in the industrial facility and includes the signature of the at least one industrial device. The blockchain transaction service is configured to write the process data to a data block in a first block chain based on metadata associated with the process data. The blockchain network comprises a watcher service configured to monitor a plurality of events associated with the first block chain in the block chain network. The watcher service is configured to detect write of process data to the data block in the first block chain.

Accordingly, the current disclosure provides for easy and tamper proof way of publishing data from mining facilities. Since the process data is published onto a block chain, it is easier to detect if the data has been tampered with. Additionally, this allows for automated sharing of data amongst industrial facilities without significant risk.

In an example, the metadata associated with the process data includes status information of one or more industrial devices associated with the at least one industrial device.
In an example, the block transaction service is configured to determine the data block in the first block chain based on the metadata associated with the process data.

In an example, the watcher service is further configured to obtain the data block from the first block chain subsequent to detecting the write of the process data to the data block in the first block chain.

In another aspect, the current disclosure describes an industrial gateway device for publishing process data in a industrial facility. The industrial control device comprises an input/output interface connectable to a plurality of industrial devices for transmitting and receiving data, one or more processors connected to a memory module. The one or more processors are configured to receive process data from at least one industrial device, wherein the process data is associated with an industrial process in the industrial facility and includes a signature of the at least one industrial device; authenticate a validity of the process data by verifying a signature of the at least one industrial device; and transmit the process data to a blockchain transaction service of the blockchain network, wherein the blockchain transaction service is configured to write the process data to a data block in a first block chain based on metadata associated with the process data. The blockchain network comprises a watcher service configured to monitor a plurality of events associated with the first block chain in the block chain network, and wherein the watcher service is configured to detect write of process data to the data block in the first block chain.

In yet another aspect, the current disclosure describes a industrial device for publishing process data in the industrial facility. The industrial device comprises a network interface connectable to an industrial gateway device for transmitting data; one or more processors connected to a memory module. The one or more processors are configured to generate process data in relation at least one industrial equipment in the industrial facility; determine condition information of one or more industrial equipment related to the at least one industrial equipment; generate metadata for the process data based on the determined condition information of the one or more industrial equipment related to the at least one industrial equipment; and transmit the process data and the metadata to the industrial gateway device for publishing the process data on a blockchain network.

In yet another aspect, the current disclosure describes a non transitory storage medium for publishing process data in a industrial facility. The non transitory storage medium comprises one or more instructions, which when executed by one or more processors, cause the one or more processors to receive process data from at least one industrial device, wherein the process data is associated with an industrial process in the industrial facility and includes a signature of the at least one industrial device; authenticate a validity of the process data by verifying a signature of the at least one industrial device; and transmit the process data to a blockchain transaction service of the blockchain network, wherein the blockchain transaction service is configured to write the process data to a data block in a first block chain based on metadata associated with the process data. The blockchain network comprises a watcher service configured to monitor a plurality of events associated with the first block chain in the block chain network, and wherein the watcher service is configured to detect write of process data to the data block in the first block chain.

The following detailed description references the drawings, wherein:
Figure 1 illustrates an example industrial facility including a blockchain network;
Figure 2 illustrates an example method for publishing data;

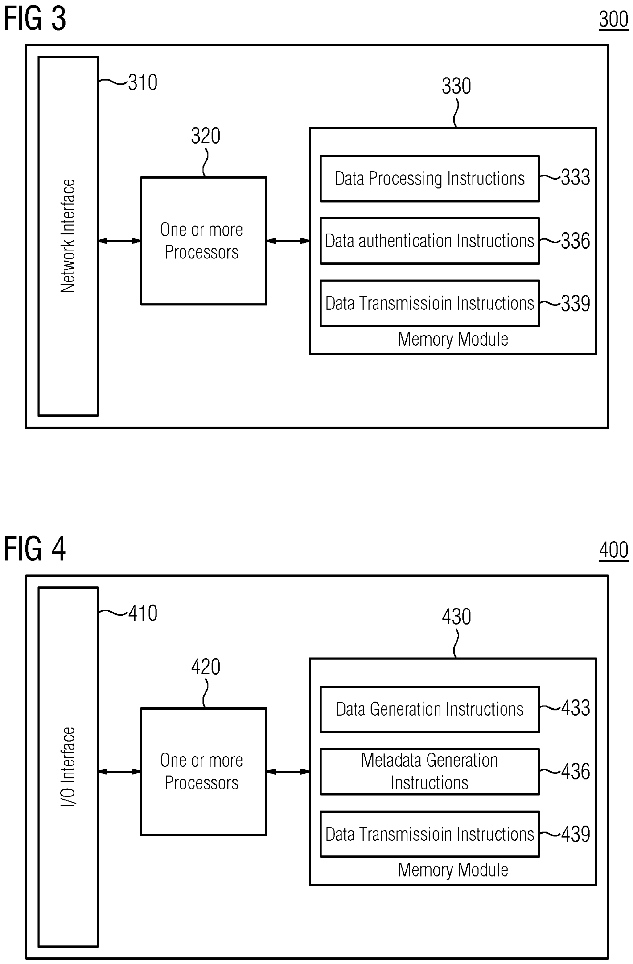

Figure 3 illustrates an example industrial gateway device for publishing data; and
Figure 4 illustrates an example an example industrial device for publishing data.

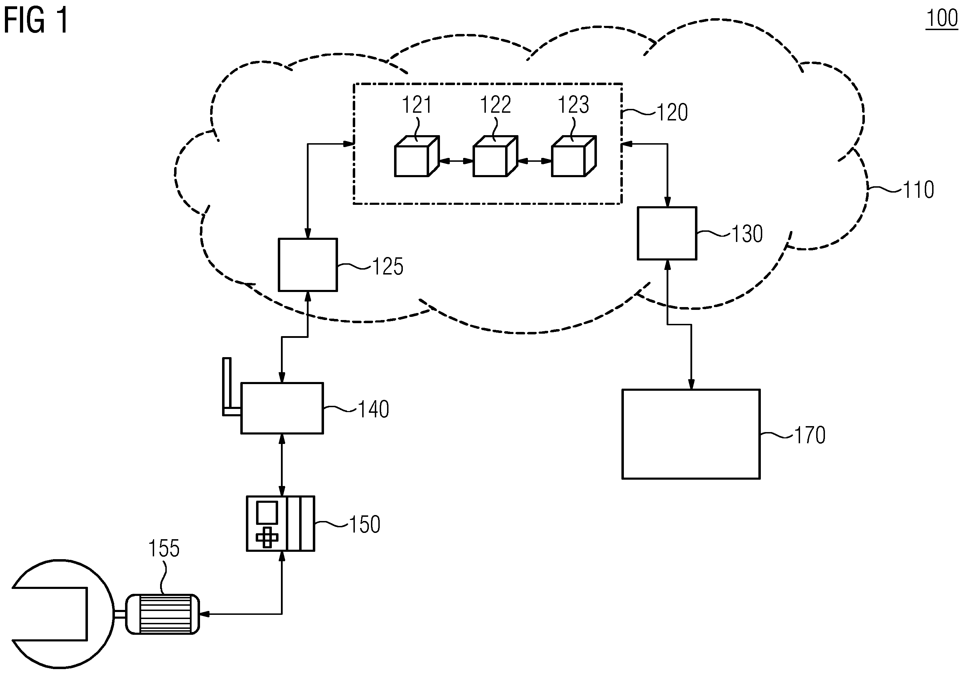

Figure 1 illustrates an industrial facility 100. Industrial facility herein refers to any environment where one or more industrial processes such as manufacturing, refining, smelting, assembly of equipment may take place and includes process plants, oil refineries, automobile factories, etc. The industrial facility 100 comprises a plurality of control devices connected to a plurality of field devices for monitoring and regulating one or more industrial processes in the industrial facility 100. For example, figure 1 shows a controller 150 for regulating the operation of a motor 155, for operating a wagon tippler of coal conveyor system in the industrial facility 100. The control devices, field devices and industrial gateway devices are together referred to as industrial devices.

The controller 150 is connected to an industrial gateway device 140. The industrial gateway device 140 receives process data from the controller 150 and publishes the process data onto a blockchain network 110 via a blockchain transaction service 125. The blockchain network 110 stores the process data on blockchains (shown in figure 1 as blockchain 120). The blockchain network 110 may be hosted on a cloud infrastructure (private, public or hybrid). In an example, the blockchain network 110 may be shared amongst a plurality of industrial facilities spread apart geographically.

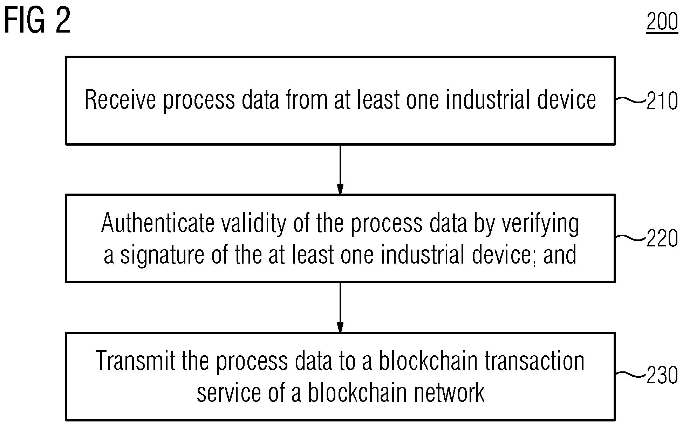

Subscriber devices (shown in the figure as subscriber device 170) can then subscribe to the blockchain network 110 for receiving process data in relation to processes in the industrial facility 100 using a blockchain watcher 130. Accordingly, the blockchain network 110 enables consolidation of process data from the industrial facility in a tamperproof and transparent fashion. This allows for trust-based exchange of process data amongst various industrial facilities in various geographical locations. The control devices, field devices and industrial gateway devices are together referred to as industrial devices. Industrial devices may also include wired or wireless Internet of Things devices (IOT devices) such as edge servers, relay nodes, etc. These aspects are explained further in relation to figure 2.

Figure 2 illustrates a method 200 for publishing data from the industrial facility 100. The method 200 is performed by the industrial gateway device 140. At step 210, the industrial gateway device 140 receives process data from the controller 150. The process data is associated with a first industrial process regulated or monitored by the controller 150. In an example, the process data includes data from sensors or controlled equipment used in the first industrial process. Further, the process data includes metadata associated with the condition of one or more equipment related to the controlled equipment or the industrial process. The process data also includes a digital signature of the controller 150 to indicate that the data is from the controller 150.

For example, as mentioned above, the controller 150 is associated with control of a motor for operating a wagon tippler in a coal conveyor system in the industrial facility 100. Accordingly, the controller 123 regulates the motor 129, connected to the conveyor system. Additionally, the controller 150 is further connected to a plurality of sensors deployed on the motor 129.One or more sensors are mounted on the motor bearing for measuring vibration and temperature of the motor bearing of the motor 129. Additionally, one or more sensors are mounted on the motor 129 for measuring for measuring temperature, current and voltage of the motor windings (stator and rotor) of the motor 129.

Accordingly, in an example, process data herein refers sensor tags of the sensors on the motor and vibration, temperature, current and voltage data of the motor 129. In an embodiment, process data includes a sensor tag and a plurality of associated sensor data and associated time stamps.

Additionally, the process data includes metadata including the condition information of the equipment associated with the wagon tippler. For example, wagon tipplers includes oil which has to be kept sufficiently cool to ensure proper functioning of the wagon tipplers. Accordingly, a cooler motor is used to cool the oil along a temperature monitoring sensor. The condition information of the cooler motor and the temperature sensor is used to generate the metadata associated with the process data. Condition information herein refers to Boolean information regarding the energization or health of the associated equipment. For example, condition information of the temperature information indicates if the temperature sensor is working or not. Similarly, the condition information of the cooler motor indicates if the motor is powered on or if the motor has tripped.

At step 220, the industrial gateway device 140 authenticates the validity of the process data by verifying the digital signature of the controller included in the process data. By verifying the digital signature, the industrial gateway device 140 ensures that the process data is indeed authentic. If the digital signature of the controller 150 cannot be verified, the process data is not processed further and a security alarm is raised by the industrial gateway device 140.

At step 230, the industrial gateway device 140 transmits the received and authenticated process data to the blockchain transaction service 125 of the blockchain network 110 for publishing the process data on the blockchain network 110. The blockchain transaction service 125 is configured to write the process data on a data block of a first blockchain (for example blockchain 120) associated with the controller 150. The blockchain transaction service 125 determines the data block to which the process data is to be written based on the metadata associated with the process data. Each data block of the first blockchain 120 is associated with a particular metadata configuration. For example, the first blockchain 120 includes a first data block 121 is associated with metadata indicating that both cooler motor and temperature sensor are operating properly. Similarly, the second data block 122 is associated with metadata indicating that the cooler motor is operating properly, and temperature sensor is not operating properly. Accordingly, when the blockchain transaction service 125 receives process data from the industrial gateway 140, the blockchain transaction service 125 determines which block to write to from the first and the second data blocks based on the metadata associated with the process data. Accordingly, the process data is stored on the blockchain network 120.

Additionally, the blockchain network 120 includes the watcher service 130. The watcher service 130 is configured to monitor a plurality of events associated with the first block chain in the block chain network 120. The plurality of events includes write operations on existing data blocks in the first block chain or creation of new data blocks in the first block chain. Accordingly, when an write operation is performed by the blockchain transaction service 125, the same is detected by the watcher service 130.

The watcher service 130 is configured to coordinate with one or more analytics applications (also referred to as subscriber devices) for providing process data from the blockchain network 120. Accordingly, based on the detected write operation, the watcher service 130 can retrieve the process data written on the data block in the first block chain and transmit the same to one or more analytics applications. In an example, the watcher service 130 is configured to transmit the sends the process data on the first blockchain to off-chain mining specific database or storage.

It may be noted that while the above method is explained using one blockchain transaction service 125, a plurality of instances of the blockchain transaction service may be used as well. Additionally, the blockchain transaction service may be realized within one or more control devices in the industrial facility.

The present disclosure can take a form of a computer program product comprising program modules accessible from computer-usable or computer-readable medium storing program code for use by or in connection with one or more computers, processing units, or instruction execution system. For example, the industrial gateway device 140 may be realized across one or more devices.

Accordingly, the current disclosure as describes an industrial gateway device 300. The industrial gateway device 300 includes a network interface 310, one or more processors 320 and a non-transitory storage medium or memory module 330. The non-transitory storage medium or memory module 330 contains a plurality of instructions (333, 336 and 339) for publishing data from the industrial facility 100.

Upon execution of the data processing instructions 333, the one or more processors 320 receive process data receive process data from at least one industrial device, wherein the process data is associated with an industrial process in the industrial facility 100 and includes a signature of the at least one industrial device. Then, upon execution of the data authentication instructions 336, the one or more processors 320 authenticate the validity of the process data by verifying a signature of the at least one industrial device. Then, upon execution of the data transmission instructions 339, the one or more processors 520 transmit the process data to the blockchain transaction service 125 of the blockchain network 110, wherein the blockchain transaction service 125 is configured to write the process data to a data block in a first block chain based on metadata associated with the process data.

Similarly, the current disclosure as describes an industrial device 400. The industrial device 400 may be any control or field device capable of generating process data. The industrial device 400 includes a I/O interface 410, one or more processors 420 and a non-transitory storage medium or memory module 430. The non-transitory storage medium or memory module 430 contains a plurality of instructions (433, 436 and 439) for publishing data from the industrial facility 100.

Upon execution of the data generation instructions 433, the one or more processors 420 are configured to generate the process data to be published. The process data may be generated by measurement or by analysis. Then, upon execution of the metadata generation instructions 436, the condition information of the equipment related to the industrial process is determined and the metadata of the process data is generated based on the determined condition information.

Then, upon the execution of the data transmission instructions 439, the process data and the metadata along with the digital signature of the industrial device 500 is transmitted to an industrial gateway device.

While the current disclosure describes the industrial gateway device 300 and the industrial device 400 as an independent component or device, the industrial gateway device 300 or the industrial device 400 may be a software component and may be realized within a control system associated with the industrial facility 100. For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments.

In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be apply to device/non transitory storage medium claims.

## Claims

1. A method (200) publishing process data of a industrial facility (100), by a control system connected to a blockchain network, the method (200) comprising:
a. receiving process data from at least one industrial device, wherein the process data is associated with an industrial process in the industrial facility (100) and includes a signature of the at least one industrial device;
b. authenticating validity of the process data by verifying a signature of the at least one industrial device; and
c. transmitting the process data to a blockchain transaction service of the blockchain network, wherein the blockchain transaction service is configured to write the process data to a data block in a first block chain based on metadata associated with the process data;
wherein the blockchain network comprises a watcher service configured to monitor a plurality of events associated with the first block chain in the block chain network, and wherein the watcher service is configured to detect write of process data to the data block in the first block chain.

2. The method as claimed in claim 1, wherein metadata associated with the process data includes status information of one or more industrial devices associated with the at least one industrial device.

3. The method as claimed in claim 1, wherein the block transaction service is configured to determine the data block in the first block chain based on the metadata associated with the process data.

4. The method as claimed in claim 1, wherein the watcher service is further configured to obtain the data block from the first block chain subsequent to detecting the write of the process data to the data block in the first block chain.

5. An industrial gateway device for publishing process data in a industrial facility, the industrial control device comprising:
a. an input/output interface connectable to a plurality of industrial devices for transmitting and receiving data ,
b. one or more processors connected to a memory module, the one or more processors configured to :
i. receive process data from at least one industrial device, wherein the process data is associated with an industrial process in the industrial facility (100) and includes a signature of the at least one industrial device;
ii. authenticate a validity of the process data by verifying a signature of the at least one industrial device; and
iii. transmit the process data to a blockchain transaction service of the blockchain network, wherein the blockchain transaction service is configured to write the process data to a data block in a first block chain based on metadata associated with the process data;
wherein the blockchain network comprises a watcher service configured to monitor a plurality of events associated with the first block chain in the block chain network, and wherein the watcher service is configured to detect write of process data to the data block in the first block chain.

6. The industrial gateway device as claimed in claim 5, wherein metadata associated with the process data includes status information of one or more industrial devices associated with the at least one industrial device.

7. The industrial gateway device as claimed in claim 5, wherein the block transaction service is configured to determine the data block in the first block chain based on the metadata associated with the process data.

8. The industrial gateway device as claimed in claim 5, wherein the watcher service is further configured to obtain the data block from the first block chain subsequent to detecting the write of the process data to the data block in the first block chain.

9. An industrial device for publishing process data in the industrial facility, the industrial device comprising:
a. a network interface connectable to an industrial gateway device for transmitting data;
b. one or more processors connected to a memory module, the one or more processors configured to:
i. generate process data in relation at least one industrial equipment in the industrial facility;
ii. determine condition information of one or more industrial equipment related to the at least one industrial equipment;
iii. generate metadata for the process data based on the determined condition information of the one or more industrial equipment related to the at least one industrial equipment;
iv. transmit the process data and the metadata to the industrial gateway device for publishing the process data on a blockchain network.

10. A non transitory storage medium for publishing process data in a industrial facility, the non transitory storage medium comprising one or more instructions, which when executed by one or more processors, cause the one or more processors to:
v. receive process data from at least one industrial device, wherein the process data is associated with an industrial process in the industrial facility (100) and includes a signature of the at least one industrial device;
vi. authenticate a validity of the process data by verifying a signature of the at least one industrial device; and
vii. transmit the process data to a blockchain transaction service of the blockchain network, wherein the blockchain transaction service is configured to write the process data to a data block in a first block chain based on metadata associated with the process data;
wherein the blockchain network comprises a watcher service configured to monitor a plurality of events associated with the first block chain in the block chain network, and wherein the watcher service is configured to detect write of process data to the data block in the first block chain.
